# EUROPEAN PATENT APPLICATION

(11) **EP 2 827 675 A1**
(43) Date of publication of application: **21.01.2015**
(21) Application number: 13761263.6
(22) Date of filing: 12.03.2013
(51) Int. Cl.: H04W 76/04, H04W 52/02

(54) **WIRELESS COMMUNICATION SYSTEM, USER EQUIPMENT, BASE STATION, SERVER APPARATUS, AND COMMUNICATION CONTROL METHOD**

(30) Priority: 15.03.2012 JP 2012059084
(71) Applicant: NTT Docomo, Inc., Tokyo 100-6150 (JP)
(72) Inventor: MORIOKA, Yasufumi, Tokyo 100-6150 (JP); HAPSARI, Wuri Andarmawanti, Tokyo 100-6150 (JP); UMESH, Anil, Tokyo 100-6150 (JP); AOYAGI, Kenichiro, Tokyo 100-6150 (JP); TAKAHASHI, Hideaki, Tokyo 100-6150 (JP); ABETA, Sadayuki, Tokyo 100-6150 (JP); HAGIWARA, Junichiro, Tokyo 100-6150 (JP)
(74) Representative: Hoffmann Eitle
(86) International application number: PCT/JP2013/056855
(87) International publication number: WO 2013/137270

(57) **Abstract**

A user equipment is capable of executing plural applications in parallel. The user equipment obtains, for each application, packet statistics information relating to packets that each of the plural applications transceives, for reporting to a base station. The base station, based on the packet statistics information received from the user equipment, calculates a state transition parameter for use in controlling the state transition of the user equipment and the base station. The base station executes state transition control based on the calculated state transition parameter.

## Description

### TECHNICAL FIELD

The present invention relates to a radio communication system, a user equipment therefor, a base station therefor, a server device therefor, and to a communication control method therefor.

### BACKGROUND ART

There is known a technique of performing a discontinuous reception (DRX) when a period in which no radio communication is performed persists at a user equipment (UE) used in a radio communication system. In this technique, every time a forward packet is received by a user equipment, a discontinuous reception transition timer (DRX inactivity timer) for determining whether to change to a discontinuous reception state is activated. In a case in which no forward packet is received before the discontinuous reception transition timer elapses, a user equipment changes to the discontinuous reception state to receive a forward packet intermittently (discontinuously). Therefore, power consumption of the user equipment can be reduced in comparison with a configuration in which a forward packet can be received any time (i.e., the continuous reception state always continues).

For example, Non-Patent Document 1 discloses a technique in which a base station instructs a user equipment to change to the discontinuous reception state. In the technique of Non-Patent Document 1, the longer the period during which a user equipment does not receive any forward packet, the longer the length of a sleep period (a period during which no reception operation is performed) during the discontinuous reception state is set, thus saving the power consumption of the user equipment.

Additionally, there is known a technique of releasing (disconnecting) wireless connection between the user equipment and the base station to change to an idle state when a period during which no radio communication is performed persists at a user equipment. Power consumption is reduced because the user equipment in the idle state does not perform reception of a forward packet. In this technique, every time a forward packet is received by a user equipment, an idle state transition timer for determining to change to an idle state is activated.

### Citation List

### Non-Patent Literature

Non-Patent Document 1 IEEE Standard 802.16e-2005

### SUMMARY OF INVENTION

### Technical Problem

Generally, in conventional techniques of discontinuous reception state transition and idle state transition, a parameter of a timer, etc., for state transition is set for each base station or for each user equipment. On the other hand, due to the high functionalization and high performance of user equipment in recent years, plural applications (e.g., a web-browsing application, a social networking service application, etc.) can be executed in parallel at a user equipment. Also, because each of the applications running on the user equipment performs network communication (transmission and reception of packets) according to a function of the respective applications, each application has peculiar traffic characteristics. Therefore, in some applications executed (or in some combination of applications), a parameter of a timer, etc., for state transition can be inappropriate, and consequently, a state transition can be inappropriate.

In consideration to the above situations, the present invention has, as an object, to enable execution of appropriate state transition operation in a radio communication system having a user equipment capable of executing plural applications in parallel.

### Solution to Problem

A radio communication system of the present invention is a radio communication system that has a user equipment and a base station capable of radio-communicating with each other, the user equipment having: an application executor configured to execute plural applications in parallel; a radio communication unit configured to execute radio communication with the base station; a packet statistics information calculator configured to obtain, for each of the plural applications, information relating to packets that each of the plural applications transceives via the radio communication unit, to calculate packet statistics information based on the obtained information; and a packet statistics information reporter configured to report the base station of the packet statistics information, and the base station having: a radio communication unit configured to execute radio communication with the user equipment; a packet statistics information receiver configured to receive the packet statistics information from the user equipment; a state transition parameter calculator configured to calculate, based on the packet statistics information received by the packet statistics information receiver, a state transition parameter for use in controlling a state transition with regard to the user equipment and the base station; and a state transition controller configured to control a state transition of the radio communication unit for the base station based on the state transition parameter calculated by the state transition parameter calculator.

Furthermore, another radio communication system of the present invention is a radio communication system that has a user equipment and a base station capable of radio-communicating with each other and a server device, the user equipment having: an application executor configured to execute plural applications in parallel; a radio communication unit configured to execute radio communication with the base station; a packet statistics information calculator configured to obtain, for each of the plural applications, information relating to packets that each of the plural applications transceives via the radio communication unit, to calculate packet statistics information based on the obtained information; and a packet statistics information reporter configured to report the server device of the packet statistics information via the base station, the server device having: a packet statistics information receiver configured to receive the packet statistics information from the user equipment; a state transition parameter calculator configured to calculate, based on the packet statistics information received by the packet statistics information receiver, a state transition parameter for use in controlling a state transition with regard to the user equipment and the base station; and a state transition parameter notifier configured to notify the base station of the state transition parameter calculated by the state transition parameter calculator, and the base station having: a radio communication unit configured to execute radio communication with the user equipment; a packet statistics information transferor configured to transfer the packet statistics information received from the user equipment; and a state transition controller configured to control a state transition of the radio communication unit for the base station based on the state transition parameter notified from the server device.

According to the above configuration, a state transition parameter is set based on packet statistics information relating to packets that plural applications in the user equipment transceive, and the state transition control of the base station is executed based on the state transition parameter. Therefore, a more appropriate state transition control can be executed in comparison with a configuration in which the state transition control of the base station is executed irrespective of applications executed at the user equipment.

In a preferred embodiment of the present invention, the radio communication unit of the base station is operable in one of the transmission states including an active state in which an RRC connection (wireless connection) established between the base station and the user equipment is used to execute radio communication with the user equipment and an idle state in which the RRC connection is released and in which no radio communication with the user equipment is executed, and the state transition parameter calculator calculates, as the state transition parameter, an idle transition timer value that is time required since the base station stops transmitting a forward packet in the active state until the transmission state changes to the idle state.

According to the above configuration, because the idle transition timer value is set based on packet statistics information relating to plural applications, the repeated establishment and release of the wireless connection can be suppressed. Therefore, the delay in the packet transmission and reception caused by having to wait for another wireless connection can be reduced, and the increase in the amount of control signals transmitted and received accompanying the state transition control can be also reduced.

In a preferred embodiment of the present invention, the state transition parameter calculator calculates the idle transition timer value for a unit of the user equipment.

According to the above configuration, based on packet statistics information of applications executed for the unit of the user equipment, the idle transition timer value can be calculated and set for the unit of the user equipment. Therefore, the state transition control for each user equipment by the base station can be executed in a more appropriate manner.

In a preferred embodiment of the present invention, the base station additionally has a state transition parameter transmitter configured to transmit the state transition parameter calculated by the state transition parameter calculator to the user equipment, and the user equipment additionally has a state transition controller configured to control a state transition of the radio communication unit for the user equipment based on the state transition parameter transmitted by the state transition parameter transmitter.

According to the above configuration, because the state transition parameter transmitted from the base station to the user equipment is also used for the state transition control of user equipment, a cooperative state transition control between the base station and the user equipment can be executed.

In a preferred embodiment of the present invention, the radio communication unit of the user equipment is operable for radio reception from the base station, in one of the reception states including a continuous reception state in which a forward packet transmitted from the base station is continuously receivable, a discontinuous reception state in which the forward packet is discontinuously receivable, and an idle state in which no forward packet is received, and the state transition parameter calculator calculates for a unit of the user equipment, as the state transition parameter, at least one of a discontinuous reception timer value that is time required since the user equipment no longer receives forward packets any more in the continuous reception state until the reception state changes to the discontinuous reception state, a discontinuous reception cycle that is a cycle in which the user equipment performs a forward packet reception in the discontinuous reception state, or a discontinuous reception duration time that is the length of time during which a forward packet receiving operation continues in the discontinuous reception state.

According to the above configuration, a state transition parameter (at least one of a discontinuous reception timer value, a discontinuous reception cycle, or a discontinuous reception duration time) relating to the discontinuous reception is set based on packet statistics information relating to plural applications. Therefore, the number of transitions between the continuous reception state and the discontinuous reception state can be suppressed. Therefore, the delay in the packet transmission and reception caused by having to wait for the execution of the discontinuous reception can be suppressed, and the increase in power consumption accompanying the transition from the discontinuous reception state to the continuous reception state can be suppressed.

A user equipment of the present invention has an application executor configured to execute plural applications in parallel; a radio communication unit configured to execute radio communication with a base station; a packet statistics information calculator configured to obtain, for each of the plural applications, information relating to packets which each of the plural applications transceives via the radio communication unit, to calculate packet statistics information based on the obtained information; and a packet statistics information reporter configured to report the base station of the packet statistics information.

In a preferred embodiment of the present invention, the user equipment additionally has a state transition controller configured to control a state transition of the radio communication unit for the user equipment based on a state transition parameter for use in controlling a state transition with regard to the user equipment and the base station, with the state transition parameter being calculated based on the reported packet statistics information and transmitted by the base station to the user equipment.

A base station of the present invention is a base station in a radio communication system having a user equipment and a base station capable of radio-communicating with each other, the base station having: a radio communication unit configured to execute radio communication with the user equipment; a packet statistics information receiver configured to receive packet statistics information calculated based on information relating to packets that each of the plural applications executed by the user equipment transceives, with the packet statistics information being reported from the user equipment; a state transition parameter calculator configured to calculate, based on the packet statistics information received by the packet statistics information receiver, a state transition parameter for use in controlling a state transition with regard to the user equipment and the base station; and a state transition controller configured to control a state transition of the radio communication unit for the base station based on the state transition parameter calculated by the state transition parameter calculator.

Another base station of the present invention is a base station in a radio communication system having a user equipment and a base station capable of radio-communicating with each other and a server device, the base station having: a radio communication unit configured to execute radio communication with the user equipment; a packet statistics information transferor configured to transfer, to the server device, packet statistics information calculated based on information relating to packets which each of the plural applications executed by the user equipment transceives, with the packet statistics information being reported from the user equipment; and a state transition controller configured to control a state transition of the radio communication unit based on a state transition parameter for use in controlling a state transition with regard to the user equipment and the base station, the state transition parameter being calculated by the server device based on the packet statistics information and notified from the server device to the base station.

A server device of the present invention has a network communication unit configured to communicate by radio with a base station communicable with a user equipment; a packet statistics information receiver configured to receive packet statistics information calculated based on information relating to packets that each of the plural applications executed by the user equipment transceives, with the packet statistics information being reported from the user equipment; a state transition parameter calculator configured to calculate, based on the packet statistics information received by the packet statistics information receiver, a state transition parameter for use in controlling a state transition with regard to the user equipment and the base station; and a state transition parameter notifier configured to notify the base station of the state transition parameter calculated by the state transition parameter calculator.

A communication control method of the present invention is a communication control method for use in a radio communication system having a user equipment and a base station capable of radio-communicating with each other, the method including: executing, at the user equipment, plural applications in parallel; obtaining, at the user equipment, for each of the plural applications, information relating to packets that each of the plural applications transceives, to calculate packet statistics information based on the obtained information; reporting, from the user equipment, the base station of the packet statistics information, receiving, at the base station, the packet statistics information from the user equipment; calculating, at the base station, based on the received packet statistics information, a state transition parameter for use in controlling a state transition with regard to the user equipment and the base station; and controlling, at the base station, a state transition for the base station based on the calculated state transition parameter.

A communication control method of the present invention is a communication control method for use in a radio communication system having a user equipment and a base station capable of radio-communicating with each other and a server device, the method including: executing, at the user equipment, plural applications in parallel; obtaining, at the user equipment, for each of the plural applications, information relating to packets that each of the plural applications transceives, to calculate packet statistics information based on the obtained information; reporting, from the user equipment, the server device of the packet statistics information via the base station; receiving, at the server device, the packet statistics information from the user equipment; calculating, at the server device, based on the received packet statistics information, a state transition parameter for use in controlling a state transition with regard to the user equipment and the base station; notifying, at the server device, the base station of the calculated state transition parameter; transferring, at the base station, the packet statistics information received from the user equipment; and controlling, at the base station, a state transition for the base station based on the state transition parameter notified from the server device.

### BRIEF DESCRIPTION OF THE DRAWINGS

Fig. 1 is a block diagram showing a radio communication system according to a first embodiment of the present invention.
Fig. 2 is a block diagram showing logical connections of elements in the radio communication system and protocol configurations therefor according to the first embodiment of the present invention.
Fig. 3 is an explanatory diagram showing operations of a user equipment and a base station in changing from an active state to an idle state.
Fig. 4 is an explanatory diagram showing operations of a user equipment and a base station in changing from a continuous reception state to a discontinuous reception state.
Fig. 5 is an explanatory diagram illustrating the relationship between packet reception by plural applications executed by a user equipment and a wireless connection state between the user equipment and the base station.
Fig. 6 is a block diagram showing a configuration of the user equipment according to the first embodiment.
Fig. 7 is a block diagram showing a configuration of the base station according to the first embodiment.
Fig. 8 is an operation sequence for setting a state transition parameter (an idle transition timer value) relating to an idle state transition of the first embodiment.
Fig. 9 is a diagram showing a correspondence table used for quantization of an average packet occurrence interval.
Fig. 10 is a diagram showing an example of packet statistics information.
Fig. 11 is an operation sequence for setting a state transition parameter (a discontinuous reception timer value, a discontinuous reception cycle, and a discontinuous reception duration time) relating to a discontinuous state reception transition of the first embodiment.
Fig. 12 is a block diagram showing a configuration of a base station of a second embodiment.
Fig. 13 is a block diagram showing a configuration of a switch station of the second embodiment.
Fig. 14 is an operation sequence for setting a state transition parameter (an idle transition timer value) relating to the idle state transition of the second embodiment.
Fig. 15 is an operation sequence for setting a state transition parameter (a discontinuous reception timer value, a discontinuous reception cycle, and a discontinuous reception duration time) relating to a discontinuous state reception transition of the second embodiment.

### DESCRIPTION OF EMBODIMENTS

### First Embodiment

### 1-1. Overview of Radio Communication System

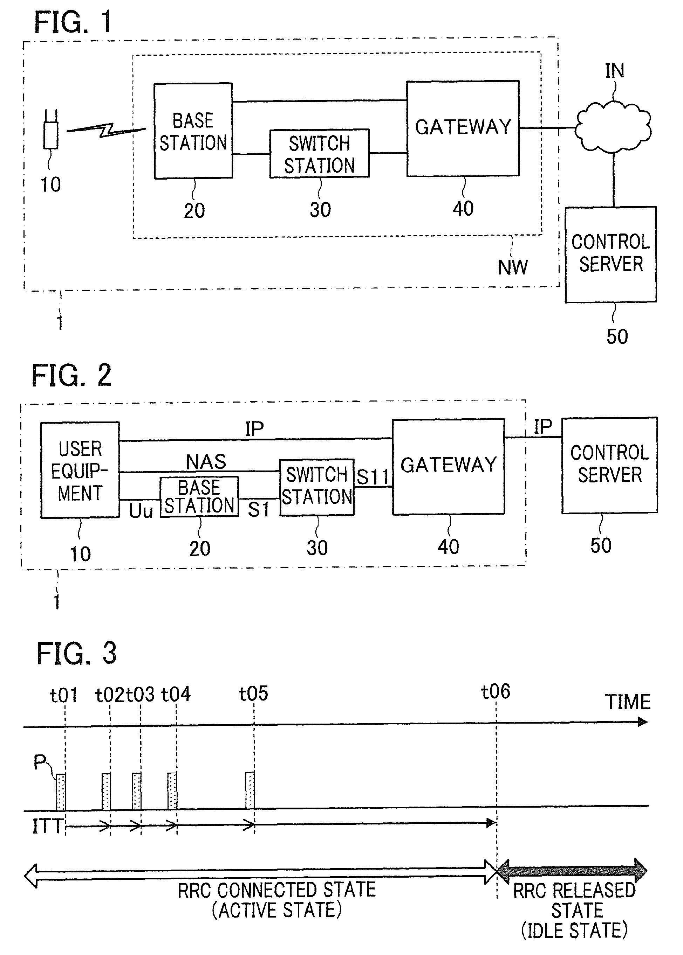

Fig. 1 is a block diagram showing a radio communication system 1 according to a first embodiment of the present invention. The radio communication system 1 has a user equipment 10 and a network NW. The network NW has a base station 20, a switch station 30, and a gateway 40 as nodes. The user equipment 10 connects to the base station 20 wirelessly. The base station 20 is connected to the switch station 30 and the gateway 40 by wire. The switch station 30 is connected to the gateway 40 by wire in addition to the base station 20. However, it may be configured so that the nodes in the network NW are connected to one another wirelessly.

The network NW is connected to the Internet IN, which is an external network, via the gateway 40 as a connection point. Connected to the Internet IN is a control server 50 capable of controlling each node of the network NW. In Fig. 1, although a single user equipment 10, a single base station 20, a single switch station 30, and a single gateway 40 are given as examples, it should be understood as a matter of course that the radio communication system 1 can include a plurality of the user equipments 10, a plurality of the base stations 20, a plurality of the switch stations 30, and a plurality of the gateways 40. It may be configured so that the control server 50 is sited in the network NW.

Each element of the radio communication system 1 performs communication in accordance with a predetermined access technology, for example, the LTE/SAE (Long Term Evolution / System Architecture Evolution) defined in the 3GPP (Third Generation Partnership Project) standard. In the present embodiment, an example is given of an embodiment in which the radio communication system 1 operates in accordance with the LTE/SAE; however, this does not intend to limit the technical scope of the present invention. The present invention can be applied to another access technology if necessary design modifications are made thereto. However, a system of radio communication between the base station 20 and the user equipment 10 can be freely selected. For example, the OFDMA (Orthogonal Frequency Division Multiple Access) can be employed in the forward link, and the SC-FDMA (Single-Carrier Frequency Division Multiple Access) can be employed in the upward link.

Fig. 2 is a block diagram showing logical connections and protocol configurations of elements in the radio communication system 1 according to the first embodiment of the present invention. The user equipment 10 and the base station 20 are connected via a Uu Interface defined in the 3GPP standard, to transmit and receive, with each other, a signal of an Access Stratum terminating at the base station 20. A signal of the Access Stratum is, for example, a Measurement Report (e.g., defined in 3GPP TS 36.331 V10.3.0 (2011-09)) reporting the base station 20 of the reception quality, etc., at the user equipment 10. Also, the base station 20 and the switch station 30 are connected by an S1 Interface defined in the 3GPP standard, to transmit and receive a control signal with each other.

The user equipment 10 and the switch station 30 are connected by a Non Access Stratum Interface defined in the 3GPP standard, to transmit and receive, with each other, a signal of the Non Access Stratum Interface terminating at the switch station 30 (i.e., not terminating at the base station 20). The signal of the Non Access Stratum is, for example, an NAS Signaling (e.g., defined in 3GPP TS 24.301 V10.5.0 (2011-12)). The switch station 30 and the gateway 40 are connected via an S11 Interface defined in the 3GPP standard, to transmit and receive control signals with each other.

The user equipment 10 and the gateway 40 are connected by an Internet Protocol (IP), to transmit and receive a packet of the IP Layer. Thus transmitting and receiving a packet enables communication between the user equipment 10 and the gateway 40 by an ICMP Protocol, HTTP Protocol, etc. The gateway 40 in the network NW and the control server 50 in the network NW are connected by the Internet Protocol, whereby the same communication as above is performed.

### 1-2. Controlling State Transition

### 1-2(1) Transition to Idle State

With reference to Fig. 3, an operation of the user equipment 10 and the base station 20 in changing from an active state to an idle state is described. The active state means a state in which a wireless connection (RRC Connection) between the user equipment 10 and the base station 20 is established and in which transmitting and receiving of a packet is possible. The idle state means a state in which a wireless connection between the user equipment 10 and the base station 20 is released (disconnected) and in which transmitting or receiving of a packet is not performed. In Fig. 3, time advances from left to right. At the start point (the left end) of Fig. 3, it is assumed that the user equipment 10 and the base station 20 are in the active state.

The base station 20 transmits a forward packet P to the user equipment 10 that is wirelessly connected. When transmission of the packet P (forward transmission) from the base station 20 to the user equipment 10 is completed, the base station 20 activates an idle transition timer ITT (each time points from t01 to t05). The idle transition timer ITT expires when a predetermined idle transition timer value VI set to the user equipment 10 elapses. The base station 20, when it transmits the forward packet P to the user equipment 10 before the idle transition timer ITT expires, again activates the idle transition timer ITT (each of the time points from t02 to t05). That is, transmission of a forward packet causes the idle transition timer ITT to be reset. When the idle transition timer ITT expires, the base station 20 releases a wireless connection (RRC connection) with the user equipment 10, to change to the idle state (time point t06). That is to say, the idle transition timer value VI is the time required since the base station 20 stopped transmitting a forward packet in the active state until it changes to the idle state.

### 1-2(2) Transition to Discontinuous Reception State

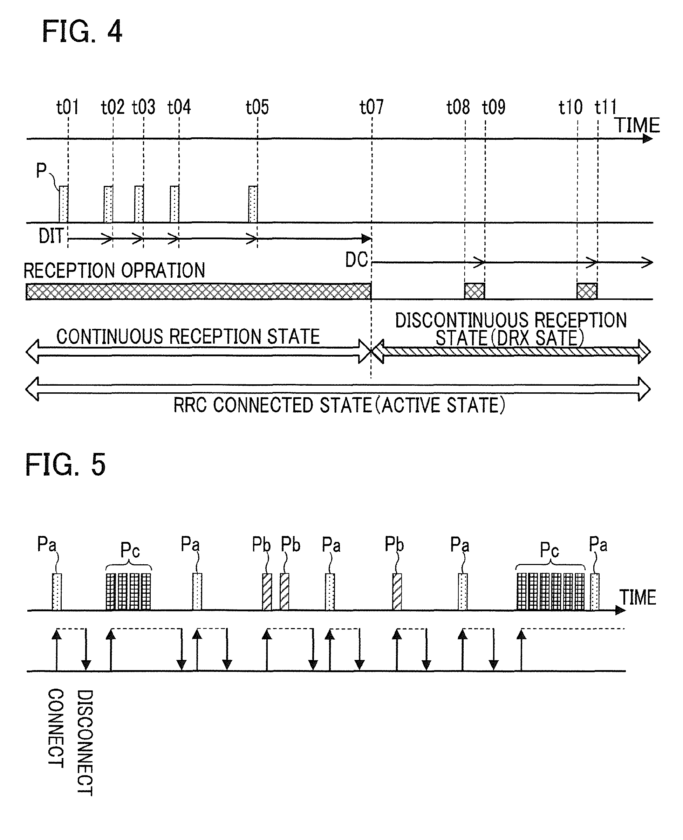

With reference to Fig. 4, an operation of the user equipment 10 and the base station 20 in changing from a continuous reception state to a discontinuous reception (DRX) state is described. The continuous reception state means a state in which the user equipment 10 can continuously receive the forward packet P transmitted from the base station 20 (a state in which reception operation is continuously performed), and more specifically, means a state in which the user equipment 10 continuously monitors a forward control channel (Physical Downlink Control Channel, PDCCH) indicating schedule information of forward packet transmission. The discontinuous reception state is a state in which the user equipment 10 can receive the forward packet P discontinuously (a state in which a reception operation is discontinuously performed), and more specifically, means a state in which the user equipment 10 monitors the forward control channel discontinuously. The continuous reception state and the discontinuous reception state are included in the active state.

The base station 20 transmits the forward packet P to the user equipment 10 that is wirelessly connected. When transmission of the packet P from the base station 20 to the user equipment 10 (forward transmission) is completed, the base station 20 activates a discontinuous reception transition timer (DRX Inactivity Timer) DIT (time points from t01 to t05). The discontinuous reception transition timer DIT expires when a predetermined discontinuous reception timer value VD set to the user equipment 10 expires (time point t07). Also, the base station 20, when it transmits a packet to the user equipment 10 before the discontinuous reception transition timer DIT expires, again activates the discontinuous reception transition timer DIT (time points t02 to t05). That is, transmission of a packet causes the discontinuous reception transition timer DIT to be reset. When the discontinuous reception transition timer DIT expires, the base station 20 and the user equipment 10 each change to the discontinuous reception state (DRX state). That is to say, the discontinuous reception timer value VD means time required since the user equipment 10 no longer receives a forward packet any more in the continuous reception state until it changes to the discontinuous reception state.

When it changes to the discontinuous reception state, the user equipment 10 performs a reception operation (monitoring of the forward control channel) once in each discontinuous reception cycle DC and throughout the discontinuous reception duration time (On Duration) OD (time points t08 to t09, and time points t10 to t11). The forward packet transmission operation at the base station 20 can be freely performed, but it is understood that it is preferred to transmit a forward packet during a period in which the user equipment 10 is performing the reception operation. In the discontinuous reception state, when the idle transition timer ITT expires, the base station 20 changes to the idle state, whereby the discontinuous reception state will end.

### 1-3. Problems in State Transition in the Present Embodiment

A case is assumed in which the user equipment 10 is capable of executing plural applications. As described before, the frequency (the number of times per unit time) of network communication (transmission and reception of a packet) for plural applications vary depending on functionality of each application. In the following, description will be given with a specific example.

Fig. 5 is an explanatory diagram illustrating the relationship between reception of the packets P by plural applications executed by the user equipment 10, and a wireless connection state between the user equipment 10 and the base station 20. In Fig. 5, time advances from left to right.

The upper portion of Fig. 5 illustrates how packets P (Pa, Pb, Pc) are transmitted from the base station 20 and are received at the user equipment 10. An application Aa receives the packet Pa, an application Ab receives the packet Pb, and an application Ac receives the packet Pc. More specifically, as shown in Fig. 5, the application Aa regularly receives the packet Pa on a regular basis. The application Aa is, for example, an application for a social networking service that receives feeds from other users on a regular basis. The application Ab receives packets Pb on an irregular basis. The application Ab is, for example, a web-browsing application for obtaining information on a web site in response to a request from a user. The application Ac receives a large number of packets Pc in a burst. The application Ac is, for example, an image downloading application. As described above, each application A (Aa, Ab, Ac) has peculiar traffic characteristics (e.g., a packet occurrence frequency (the number of times of occurrences of packets per unit time), etc.).

The lower portion of Fig. 5 indicates a wireless connection state (an active state or an idle state) between the user equipment 10 and the base station 20. The upward arrow shows the establishment of a wireless connection, and the downward arrow shows the release of the wireless connection (i.e., expiration of the idle transition timer ITT).

Description is now given from the left end according to time. First of all, the base station 20 and the user equipment 10 are wirelessly connected for the forward transmission of the packet Pa. The idle transition timer ITT activated in response to the completion of transmission of the packet Pa from the base station 20 to the user equipment 10 expires when the idle transition timer value VI set to the user equipment 10 elapses, and the wireless connection between the base station 20 and the user equipment 10 is then released. At times of establishing and releasing the wireless connection, since transmission and reception of control signals is performed between the user equipment 10 and the base station 20, between the base station 20 and the switch station 30, etc., the burden is caused on the network NW.

Subsequently, for the forward transmission of a packet Pc, the base station 20 and the user equipment 10 are again wirelessly connected. Similarly to the above, after the transmission and reception of the packets Pc, having occurred in a burst, the idle transition timer ITT expires, and then the wireless connection is released. Thereafter, similarly, in response to transmission and reception of the packets P (Pa, Pb, Pc), the establishment and release (state transition) of the wireless connection is repeated.

As is understood from the foregoing, in a case in which the idle transition timer value VI is set to each user equipment 10, depending on the traffic characteristic of the application A running on the user equipment 10, the establishment and release (state transition) of the wireless connection is repeated between the user equipment 10 and the base station 20. As a result, the problem is that the packet transmission and reception are delayed by a time period required for the establishment of the connection, and that the transmission and reception of control signals increase accompanying the wireless connection control.

It is to be noted that, in the foregoing description, the problem was described for the case of the idle state transition as an example. However, it is clear that the same problem exists also in the discontinuous reception state transition. This is because the state transition is executed according to a predetermined timer value in both cases.

In consideration of the above, in the present embodiment, parameters used in the state transition (transition between the idle state transition and the discontinuous reception state) are controlled based on packet statistics information (e.g., packet occurrence interval) relating to the application A (Aa, Ab, Ac, ...) that can run on the user equipment 10.

### 1-4. Configuration of Elements in Radio Communication System

### 1-4(1) Configuration of User Equipment

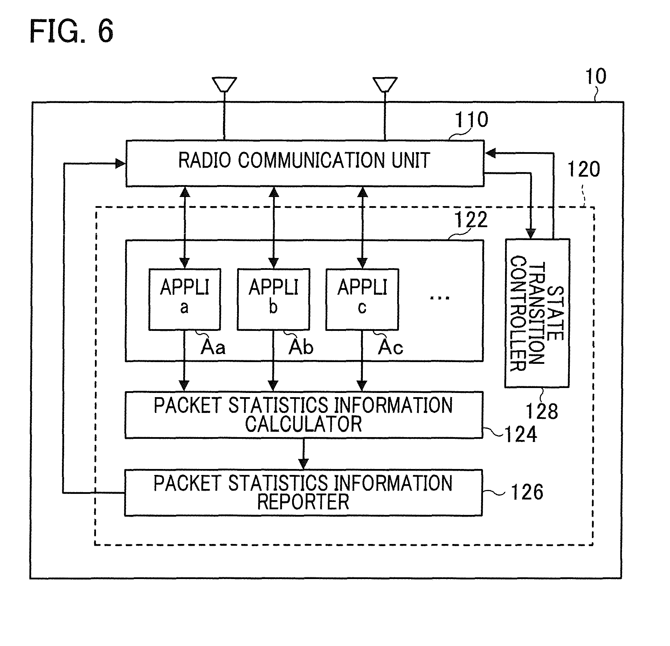

Fig. 6 is a block diagram showing a configuration of the user equipment 10 according to the first embodiment. The user equipment 10 has a radio communication unit 110 and a controller 120. It is to be noted that, for simplicity, an output device for outputting voice, video, etc., an input device for receiving instructions from a user, etc., are not shown.

The radio communication unit 110 is an element for executing radio communication with the base station 20, and it has a transmitting-receiving antenna (transceiver), a conversion circuit for receiving radio waves from the base station 20 for conversion into electric signals, and a transmission circuit for converting electric signals such as voice signals, etc., into radio waves for transmission. The radio communication unit 110 is operable in one of a continuous reception state in which it can continuously receive the forward packet P transmitted from the base station 20, a discontinuous reception state in which it can discontinuously receive the forward packet P, and an idle state in which it does not receive the forward packet P.

The controller 120 has an application executor 122, a packet statistics information calculator 124, a packet statistics information reporter 126, and a state transition controller 128. The application executor 122 is capable of executing plural applications A (Aa, Ab, Ac, ...) in parallel ("Appli" in the drawing is an abbreviation of "application"). The packet statistics information calculator 124 obtains, for each application A, information relating to packets each of the plural applications A (Aa, Ab, Ac, ...) transceives via the radio communication unit 110, to calculate packet statistics information I based on the obtained information. The packet statistics information reporter 126 reports the base station 20 of the packet statistics information I via the radio communication unit 110. The state transition controller 128 executes state transition control of the radio communication unit 110 of the user equipment 10. These operations will be described below in detail.

The controller 120 and each element contained in the controller 120 (the application executor 122, the packet statistics information calculator 124, the packet statistics information reporter 126, and the state transition controller 128) are functional blocks implemented by a CPU (Central Processing Unit) (not shown) of the user equipment 10, by executing a computer program stored in a storage unit (not shown) and functioning in accordance with the computer program. The same applies to each application A (Aa, Ab, Ac, ...) executed by the application executor 122. The application A may be stored in the storage unit at the time of manufacturing the user equipment 10 or may be downloaded to the user equipment 10 from the Internet, etc., for storage in the storage unit.

### 1-4(2) Configuration of Base Station

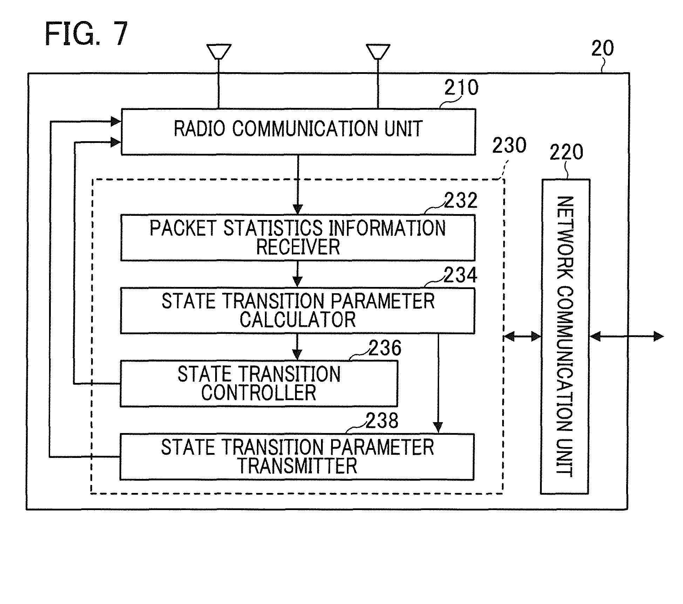

Fig. 7 is a block diagram showing a configuration of the base station 20 according to the first embodiment. The base station 20 has a radio communication unit 210, a network communication unit 220, and a controller 230.

The radio communication unit 210 is an element for executing radio communication with the user equipment 10, and has a transmitting-receiving antenna, a reception circuit for receiving radio waves from the user equipment 10 for conversion into electric signals, and a transmission circuit for converting electric signals such as voice signals, etc., into radio waves for transmission. The radio communication unit 210 is operable either in an active state in which a wireless connection (RRC connection) established between the user equipment 10 is used to execute radio communication with the user equipment 10 or in an idle state in which the wireless connection (RRC connection) is released and in which no radio communication with the user equipment 10 is executed. As described before, the active state includes the continuous reception state and the discontinuous reception state.

The network communication unit 220 is an element for executing communication with each node in the network NW and a node outside the network NW (e.g., the control server 50), to transmit and receive electric signals with another node. In a case in which the base station 20 executes wireless communication with another node, it may be configured so that the radio communication unit 210 serves also as the network communication unit 220.

The controller 230 has a packet statistics information receiver 232, a state transition parameter calculator 234, a state transition controller 236, and a state transition parameter transmitter 238. The packet statistics information receiver 232 receives the packet statistics information I reported from the packet statistics information reporter 126 of the user equipment 10, for supply to the state transition parameter calculator 234. The state transition parameter calculator 234, based on the supplied packet statistics information I, calculates a state transition parameter CP (an idle transition timer value VI, a discontinuous reception timer value VD, a discontinuous reception cycle DC, a discontinuous reception duration time OD, etc.) used for controlling a state transition with regard to the user equipment 10 and the base station 20. The state transition controller 236, based on the calculated state transition parameter CP, executes state transition control of the radio communication unit 210 of the base station 20. The state transition parameter transmitter 238 transmits the state transition parameter CP calculated by the state transition parameter calculator 234 via the radio communication unit 210 to the user equipment 10. These operations will be described below in detail.

The controller 230 and each element (the packet statistics information receiver 232, the state transition parameter calculator 234, the state transition controller 236, and the state transition parameter transmitter 238) included in the controller 230 are functional blocks implemented by a CPU (Central Processing Unit) (not shown) of the base station 20, by executing a computer program stored in a storage unit (not shown) and functioning in accordance with the computer program.

### 1-5. Sequence of Operation

### 1-5(1) Sequence of Setting Parameter for Idle State Transition

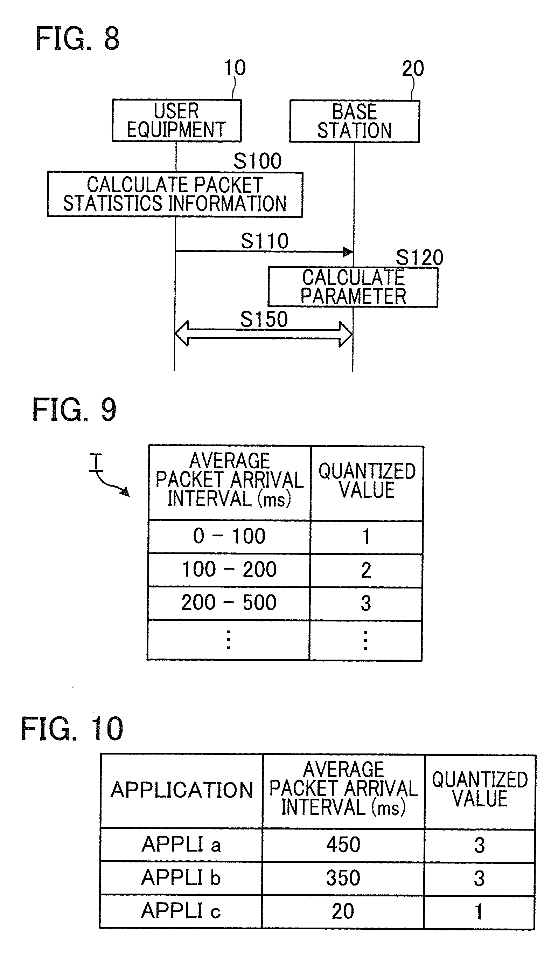

Fig. 8 shows a sequence of operation for setting the state transition parameter CP (idle transition timer value VI, etc.) relating to the idle state transition of the first embodiment. It is to be noted that setting of the following state transition parameter CP (idle transition timer value VI) can be executed for the unit of the user equipment 10.

The user equipment 10 (packet statistics information calculator 124) obtains, for each application A (Aa, Ab, Ac, ...), information relating to packets which each of the applications A transceives, to calculate the packet statistics information I based on the obtained information (S100). The packet statistics information I may be calculated in a freely selected manner. The packet statistics information I is, for example, a value obtained by quantizing an average packet occurrence interval X over a predetermined period of time for each application A (Fig. 10) in accordance with a correspondence table T (Fig. 9). In this example, when the average packet occurrence interval X is equal to or greater than 0 ms and less than 100 ms, "1" is calculated as the quantized value; when the average packet occurrence interval X is equal to or greater than 100 ms and smaller than 200 ms, "2" is calculated as the quantized value; and when the average packet occurrence interval X is equal to or greater than 200 ms and less than 500 ms, "3" is calculated as the quantized value. Therefore, the quantized value of application Aa for which the average packet occurrence interval X is 450 ms is "3", the quantized value of application Ab for which the average packet occurrence interval X is 350 ms is "3", and the quantized value of application Ac for which the average packet occurrence interval X is 20 ms is "1".

The calculated packet statistics information I is reported from the user equipment 10 (the packet statistics information reporter 126) to the base station 20 (the packet statistics information receiver 232) (S110). The state transition parameter calculator 234 of the base station 20 calculates the idle transition timer value VI based on the packet statistics information I (S120). The idle transition timer value VI may be calculated in a freely selected manner, but it is preferable that the idle transition timer value VI be calculated based on the greatest quantized value from among those corresponding to the reported pieces of packet statistics information I. For example, in the above example, based on "3" being the greatest quantized value (values corresponding to the applications Aa and Ab), a multiple (e.g., 4000 ms by a factor of 10) of the maximum value of a section to which the quantized value belongs (i.e., 400 ms) can be calculated as the idle transition timer value VI.

The base station 20 (the state transition controller 236) sets the calculated idle transition timer value VI to the radio communication unit 210 of the base station 20. The radio communication unit 210 changes a state based on the set idle transition timer value VI (S150). That is, in the same way as what was explained in the section 1-2 (1) with reference to Fig. 3, the base station 20 (the radio communication unit 210) activates the idle transition timer ITT every time it transmits the packet P to the user equipment 10, and releases the wireless connection (RRC connection) with the user equipment 10 when the idle transition timer ITT expires.

### 1-5(2) Sequence of Setting Parameter for Discontinuous Reception State Transition

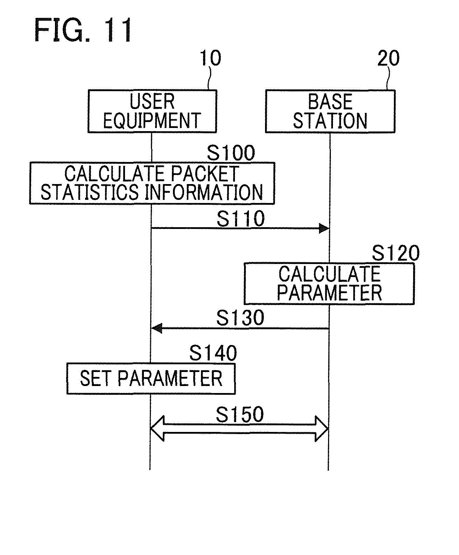

Fig. 11 shows an operation sequence for setting the state transition parameter CP (a discontinuous reception timer value VD, a discontinuous reception cycle DC, a discontinuous reception duration time OD, etc.,) relating to a discontinuous state reception transition of the first embodiment.

The user equipment 10, in the same way as described in Section 1-5(1), calculates the packet statistics information I for reporting to the base station 20 (S100,S110). The state transition parameter calculator 234 of the base station 20 calculates the state transition parameter CP (the discontinuous reception timer value VD, the discontinuous reception cycle DC, and the discontinuous reception duration time OD) based on the reported packet statistics information I (S120). Each state transition parameter CP can be calculated in a freely selected manner. However, similarly as described in Section 1-5(1), it is preferable that each state transition parameter CP be calculated based on the greatest quantized value from among those corresponding to the reported pieces of packet statistics information I. For example, in the above example, based on the greatest quantized value, "3", the greatest value of a section to which the quantized value belongs (i.e., 400 ms) can be calculated as the discontinuous reception timer value VD and the discontinuous reception cycle DC. Also, a value obtained by dividing the greatest value by a predetermined value (for example, 40 ms obtained by dividing by 10) can be calculated by the discontinuous reception duration time OD. It is to be noted that a configuration can be employed such as in which one or two of the discontinuous reception timer value VD, the discontinuous reception cycle DC, and the discontinuous reception duration time OD is calculated based on the packet statistics information I and in which the other remaining two parameters or one parameter are set to a predetermined value.

The base station 20 (the state transition controller 236) sets the calculated state transition parameter CP (the discontinuous reception timer value VD, the discontinuous reception cycle DC, and the discontinuous reception duration time OD) to the radio communication unit 210 of the base station 20. Also, the base station 20 (the state transition parameter transmitter 238) transmits the calculated state transition parameter CP to the user equipment 10 (S130). The user equipment 10 (the state transition controller 128) sets the received state transition parameter CP to the radio communication unit 110 of the user equipment 10 (S140).

The base station 20 (the radio communication unit 210) and the user equipment 10 (the radio communication unit 110) change a state based on the set state transition parameter CP (the discontinuous reception timer value VD, the discontinuous reception cycle DC, and the discontinuous reception duration time OD) (S150). That is, in the same way as described with reference to Fig. 4 in Section 1-2(2), the base station 20 (the radio communication unit 210) activates the discontinuous reception transition timer DIT every time the base station 20 transmits the packet P to the user equipment 10, and changes to the discontinuous reception state (the DRX state) when the discontinuous reception transition timer DIT expires. Similarly, the user equipment 10 (the radio communication unit 110) activates the discontinuous reception transition timer DIT every time the user equipment 10 receives the packet P from the base station 20, and changes to the discontinuous reception state (the DRX state) when the discontinuous reception transition timer DIT expires. The operation after the discontinuous reception state transition is executed is the same as described above.

### 1-6. Actions and Effects of the Present Embodiment

According to the embodiment described in the foregoing, the state transition parameter CP is set based on the packet statistics information I relating to packets which plural applications in the user equipment 10 transceive, the state transitions (the idle state transition and the discontinuous reception state transition) of the user equipment 10 and the base station 20 are controlled based on the state transition parameter CP, and therefore, the repeated establishment and release of the wireless connection is reduced. Therefore, the delay in the packet transmission and reception caused by having to wait for another wireless connection can be reduced, and the increase in the amount of control signals transmitted and received accompanying the state transition control can also be reduced.

### Second Embodiment

In the following, description will be given of a second embodiment of the present invention. In each of the embodiments illustrated in the following, description is omitted as appropriate of those elements for which the actions and functions are the same as the first embodiment, by applying the same reference numbers assigned in the above description.

### 2-1. Configuration of Each Element

### 2-1(1) Configuration of Base Station

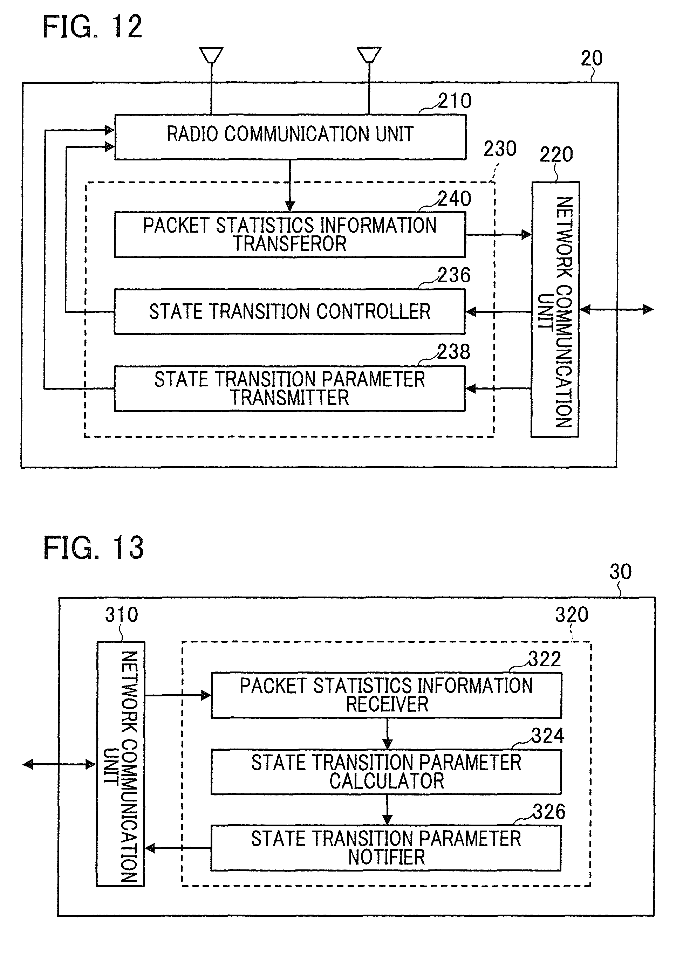

Fig. 12 is a block diagram showing a configuration of the base station 20 of the second embodiment. When compared with the base station 20 of the first embodiment, the base station 20 of the second embodiment does not have the packet statistics information receiver 232 and the state transition parameter calculator 234, but instead has a packet statistics information transferor 240. The packet statistics information transferor 240 receives the packet statistics information I reported from the packet statistics information reporter 126 of the user equipment 10, to transfer via the network communication unit 220 to the switch station 30. The state transition controller 236 and the state transition parameter transmitter 238 are notified of the state transition parameter CP from the switch station 30 (described later).

### 2-1(2) Configuration of Switch Station

Fig. 13 is a block diagram showing a configuration of the switch station 30 of the second embodiment. The switch station 30 is a server device provided with a network communication unit 310 and a controller 320.

The network communication unit 310 is an element for performing communication between each node in the network NW and a node (e.g., the control server 50) outside the network NW, and transmits and receives electric signals to and from another node by wire or wirelessly.

The controller 320 has a packet statistics information receiver 322, a state transition parameter calculator 324, and a state transition parameter notifier 326. The packet statistics information receiver 322 receives the packet statistics information I from the user equipment 10, for supply to the state transition parameter calculator 324, the packet statistics information I having been transferred from the packet statistics information transferor 240 of the base station 20. The state transition parameter calculator 324, based on the supplied packet statistics information I, calculates the state transition parameter CP used in controlling the state transition with respect to the user equipment 10 and the base station 20. The state transition parameter notifier 326 transmits (notifies) the state transition parameter CP calculated by the state transition parameter calculator 324 via the network communication unit 310 to the base station 20.

### 2-2. Operation Sequence

### 2-2(1) Operation Sequence for Idle State Transition

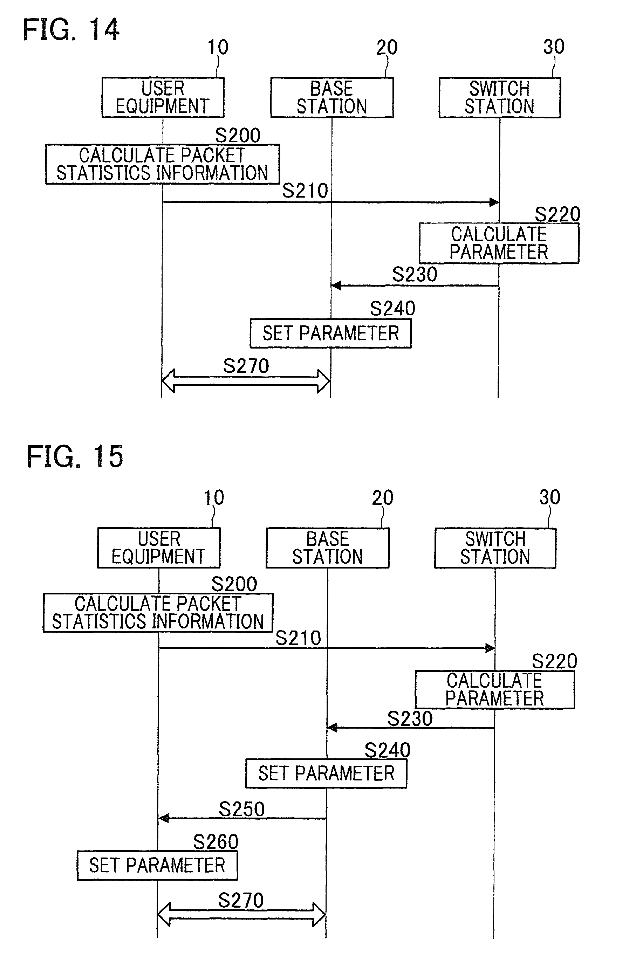

Fig. 14 shows an operation sequence for setting the state transition parameter CP (the idle transition timer value VI, etc.,) relating to the idle state transition of the second embodiment. It is to be noted that the following setting operation of the state transition parameter CP (the idle transition timer value VI) can be executed for the unit of user equipment 10.

The user equipment 10 (the packet statistics information calculator 124) obtains information for each application A, to calculate the packet statistics information I based on the information (S200). The method for calculating the packet statistics information I is the same as the first embodiment. The calculated packet statistics information I is reported from the user equipment 10 (the packet statistics information reporter 126) via the base station 20 (the packet statistics information transferor 240) to the switch station 30 (the packet statistics information receiver 322) (S210). The switch station 30 can store the reported packet statistics information I in a storage device of the switch station 30. It is preferable that the packet statistics information I be transmitted as a Non Access Stratum. In this case, in the Non Access Stratum, the user equipment 10 directly transmits (reports) the message to the switch station 30.

The switch station 30 (the state transition parameter calculator 324) calculates the idle transition timer value VI based on the packet statistics information I (S220). The method for calculating the idle transition timer value VI may be the same as that of the first embodiment. Alternatively, the idle transition timer value VI may be calculated based on the information (e.g., information relating to packets with regard to the plural base stations 20) that the switch station 30 has. The switch station 30 (the state transition parameter notifier 326) notifies the base station 20 of the idle transition timer value VI (S230). The base station 20 (the state transition controller 236) sets the notified idle transition timer value VI to the radio communication unit 210 of the base station 20 (S240). The radio communication unit 210 executes a state transition based on the idle transition timer value VI (S270). The specific operation is as described above in Section 1-5(1).

### 2-2(2) Operation Sequence for Discontinuous Reception State Transition

Fig. 15 shows an operation sequence for setting the state transition parameter CP (the discontinuous reception timer value VD, the discontinuous reception cycle DC, the discontinuous reception duration time OD, etc.) relating to the discontinuous state reception transition of the second embodiment.

The user equipment 10, in the same way as described in Section 2-2(1), calculates the packet statistics information I, for reporting to the switch station 30 (S200,S210). The switch station 30 can store the reported packet statistics information I in the storage device of the switch station 30. The switch station 30 (the state transition parameter calculator 324), based on the reported packet statistics information I, calculates the state transition parameter CP (the discontinuous reception timer value VD, the discontinuous reception cycle DC, and the discontinuous reception duration time OD) (S220). The method for calculating each state transition parameter CP may be the same as that of the first embodiment. Alternatively, each state transition parameter CP may be calculated based on the information (e.g., information relating to packets with regard to plural base station 20) that the switch station 30 has.

The switch station 30 (the state transition parameter notifier 326) transmits the calculated state transition parameter CP to the base station 20 (S230). The base station 20 (the state transition controller 236) sets the notified state transition parameter CP to the radio communication unit 210 of the base station 20 (S240). The base station 20 (the state transition parameter transmitter 238) also transmits the calculated state transition parameter CP to the user equipment 10 (S250). The user equipment 10 (the state transition controller 128) sets the received state transition parameter CP to the radio communication unit 110 of the user equipment 10 (S260). The base station 20 (the radio communication unit 210) and the user equipment 10 (the radio communication unit 110) execute a state transition based on the set state transition parameter CP (the discontinuous reception timer value VD, the discontinuous reception cycle DC, and the discontinuous reception duration time OD) (S270). Specific operation is as described above in Section 1-5(2).

### 2-3. Actions and Effects of the Present Embodiment

According to the embodiment described above, the same actions and effects as those of the first embodiment can be obtained. In particular, the configuration of the present embodiment is an effective configuration in a case in which the base station 20 sets information that cannot be set to the base station 20 itself. Also, since the packet statistics information I is transmitted from the base station 20 to an upper-layer server device (the switch station 30), the state transition parameter CP can be calculated based on a greater amount of information (e.g., information possessed by plural base stations 20 other than the base station 20 having received the packet statistics information I from the user equipment 10).

### 3. Modifications

The above embodiments can be modified in various ways. Specific examples of modifications will be illustrated in the following. Two or more of the following modification examples can be freely selected and combined as long as they do not conflict with each other.

### (1) Modification 1

In the above embodiment, the transition to the idle state (release of the RRC connection) is executed, with the expiration of the idle transition timer ITT at the base station 20 as a trigger, and the user equipment 10 operates in accordance with instructions from the base station 20. Therefore, the base station 20 does not have to transmit the state transition parameter CP to the user equipment 10. Accordingly, in a configuration in which the transition to the discontinuous reception state is not executed in the radio communication system 1, the base station 20 does not have to have the state transition parameter transmitter 238, and the user equipment 10 does not have to have the state transition controller 128.

### (2) Modification 2

A trigger for the user equipment 10 to calculate and to report the packet statistics information I can be freely selected. The packet statistics information I may be calculated and transmitted when a bearer, which is a logical path for transmitting user data, is established. Alternatively, the packet statistics information I may be calculated and transmitted at freely selected timings (e.g., at a predetermined cycle).

### (3) Modification 3

In the above embodiment, the average packet occurrence interval X for each application A was described as an example of the packet statistics information I, but a freely selected value relating to packets can be employed as the packet statistics information I. For example, an average packet size Y for each application A may be employed as the packet statistics information I. Statistics values such as a mode, median, variance, standard deviation, etc., instead of an average value (the average packet occurrence interval or the average packet size) may be employed as the packet statistics information I. A combination of plural pieces of information may be employed as the packet statistics information I. A value (e.g., average value) obtained by statistically processing information obtained with regard to plural applications A (Aa, Ab, Ac, ...) (e.g., the average packet occurrence interval X) may be employed as the packet statistics information I.

The packet statistics information I may be a value obtained by the quantization in accordance with the correspondence table T as in the above embodiment, or may be a value obtained by conversion using a different method. For example, an arithmetically converted value Z (Z = 100X + Y) by adding a value which is a product of the average packet occurrence interval X by 100 times to the average packet size Y may be employed as the packet statistics information I. At the base station 20, which is a receiving side, the inverse calculations of the value Z is executed to enable the restoration of the original information (the average packet occurrence interval X or the average packet size Y).

### (4) Modification 4

In the second embodiment, the switch station 30 calculates the state transition parameter CP, but another server device (the gateway 40 or the control server 50) may calculate the state transition parameter CP. In this case, another server device (the gateway 40 or the control server 50) has the same configuration as that of the switch station 30 of the second embodiment. In other words, in the second embodiment, a freely selected server device may be employed as the subject for calculating the state transition parameter CP.

### (5) Modification 5

In the first embodiment, the base station 20 may calculate the state transition parameter CP based on the packet statistics information I and information obtained from another server device (the switch station 30, the gateway 40, or the control server 50). Similarly, in the second embodiment, the switch station 30 may calculate the state transition parameter CP based on the packet statistics information I and information obtained from another server device (the base station 20, the gateway 40, or the control server 50).

### (6) Modification 6

The user equipment 10 is a freely selected device capable of radio-communicating with the base station 20. That is, the user equipment 10 may be, for example, any radio terminal such as a portable telephone terminal such as a feature phone or a smartphone, etc., a desktop type personal computer, a notebook type personal computer, a UMPC (Ultra-Mobile Personal Computer), and a portable game device.

### (7) Modification 7

Each function executed by the CPU in each element (the user equipment 10, the base station 20, the switch station 30, the gateway 40, and the control server 50) in the radio communication system 1 may be executed by hardware or by a programmable logic device such as an FPGA (Field Programmable Gate Array), DSP (Digital Signal Processor), etc., instead of by the CPU.

### Description of Reference Numerals

1...... radio communication system, 10...... user equipment, 110 ...... radio communication unit, 120...... controller, 122...... application executor, 124......packet statistics information calculator, 126......packet statistics information reporter, 128...... state transition controller, 20...... base station, 210...... radio communication unit, 220...... network communication unit, 230......controller, 232......packet statistics information receiver, 234...... state transition parameter calculator, 23 6 ...... state transition controller, 238...... state transition parameter transmitter, 240......packet statistics information transferor, 30......switch station, 310......network communication unit, 320...... controller, 322......packet statistics information receiver, 324......state transition parameter calculator, 326...... state transition parameter notifier, 40......gateway, 50......control server, A (Aa, Ab, Ac) ......application, CP......state transition parameter, DC...... discontinuous reception cycle, DIT......discontinuous reception transition timer, I......packet statistics information, IN......Internet, ITT......idle transition timer, NW......network, OD......discontinuous reception duration time, P (Pa, Pb, Pc) ......packet, T......correspondence table, UE......user equipment, VD......discontinuous reception timer value, VI...... idle transition timer value, t...... time point.

## Claims

1. A radio communication system having a user equipment and a base station capable of radio-communicating with each other,
the user equipment comprising:
an application executor configured to execute plural applications in parallel;
a radio communication unit configured to execute radio communication with the base station;
a packet statistics information calculator configured to obtain, for each of the plural applications, information relating to packets that each of the plural applications transceives via the radio communication unit, to calculate packet statistics information based on the obtained information; and
a packet statistics information reporter configured to report the base station of the packet statistics information, and
the base station comprising:
a radio communication unit configured to execute radio communication with the user equipment;
a packet statistics information receiver configured to receive the packet statistics information from the user equipment;
a state transition parameter calculator configured to calculate, based on the packet statistics information received by the packet statistics information receiver, a state transition parameter for use in controlling a state transition with regard to the user equipment and the base station; and
a state transition controller configured to control a state transition of the radio communication unit for the base station based on the state transition parameter calculated by the state transition parameter calculator.

2. A radio communication system having a user equipment and a base station capable of radio-communicating with each other and a server device,
the user equipment comprising:
an application executor configured to execute plural applications in parallel;
a radio communication unit configured to execute radio communication with the base station;
a packet statistics information calculator configured to obtain, for each of the plural applications, information relating to packets that each of the plural applications transceives via the radio communication unit, to calculate packet statistics information based on the obtained information; and
a packet statistics information reporter configured to report the server device of the packet statistics information via the base station,
the server device comprising:
a packet statistics information receiver configured to receive the packet statistics information from the user equipment;
a state transition parameter calculator configured to calculate, based on the packet statistics information received by the packet statistics information receiver, a state transition parameter for use in controlling a state transition with regard to the user equipment and the base station; and
a state transition parameter notifier configured to notify the base station of the state transition parameter calculated by the state transition parameter calculator, and
the base station comprising:
a radio communication unit configured to execute radio communication with the user equipment;
a packet statistics information transferor configured to transfer the packet statistics information received from the user equipment; and
a state transition controller configured to control a state transition of the radio communication unit for the base station based on the state transition parameter notified from the server device.

3. The radio communication system of Claim 1,
wherein the radio communication unit of the base station is operable in one of transmission states including an active state in which an RRC connection established between the base station and the user equipment is used to execute radio communication with the user equipment and an idle state in which the RRC connection is released and in which no radio communication with the user equipment is executed, and
wherein the state transition parameter calculator calculates, as the state transition parameter, an idle transition timer value that is time required since the base station stops transmitting a forward packet in the active state until the transmission state changes to the idle state.

4. The radio communication system of Claim 3,
wherein the state transition parameter calculator calculates the idle transition timer value for a unit of the user equipment.

5. The radio communication system of Claim 1,
the base station further comprising a state transition parameter transmitter configured to transmit the state transition parameter calculated by the state transition parameter calculator to the user equipment, and
the user equipment further comprising a state transition controller configured to control a state transition of the radio communication unit for the user equipment based on the state transition parameter transmitted by the state transition parameter transmitter.

6. The radio communication system of Claim 5,
wherein the radio communication unit of the user equipment is operable for radio reception from the base station, in one of reception states including a continuous reception state in which a forward packet transmitted from the base station is continuously receivable, a discontinuous reception state in which the forward packet is discontinuously receivable, and an idle state in which no forward packet is received, and
wherein the state transition parameter calculator calculates for a unit of the user equipment, as the state transition parameter, at least one of a discontinuous reception timer value that is time required since the user equipment no longer receives forward packets any more in the continuous reception state until the reception state changes to the discontinuous reception state, a discontinuous reception cycle that is a cycle in which the user equipment performs a forward packet reception in the discontinuous reception state, or a discontinuous reception duration time that is the length of time during which a forward packet receiving operation continues in the discontinuous reception state.

7. A user equipment comprising:
an application executor configured to execute plural applications in parallel;
a radio communication unit configured to execute radio communication with a base station;
a packet statistics information calculator configured to obtain, for each of the plural applications, information relating to packets which each of the plural applications transceives via the radio communication unit, to calculate packet statistics information based on the obtained information; and
a packet statistics information reporter configured to report the base station of the packet statistics information.

8. The user equipment of Claim 7, further comprising a state transition controller configured to control a state transition of the radio communication unit for the user equipment based on a state transition parameter for use in controlling a state transition with regard to the user equipment and the base station, with the state transition parameter being calculated based on the reported packet statistics information and transmitted by the base station to the user equipment.

9. A base station in a radio communication system having a user equipment and a base station capable of radio-communicating with each other, the base station comprising:
a radio communication unit configured to execute radio communication with the user equipment;
a packet statistics information receiver configured to receive packet statistics information calculated based on information relating to packets that each of plural applications executed by the user equipment transceives, with the packet statistics information being reported from the user equipment;
a state transition parameter calculator configured to calculate, based on the packet statistics information received by the packet statistics information receiver, a state transition parameter for use in controlling a state transition with regard to the user equipment and the base station; and
a state transition controller configured to control a state transition of the radio communication unit for the base station based on the state transition parameter calculated by the state transition parameter calculator.

10. A base station in a radio communication system having a user equipment and a base station capable of radio-communicating with each other and a server device, the base station comprising:
a radio communication unit configured to execute radio communication with the user equipment;
a packet statistics information transferor configured to transfer, to the server device, packet statistics information calculated based on information relating to packets that each of plural applications executed by the user equipment transceives, with the packet statistics information being reported from the user equipment; and
a state transition controller configured to control a state transition of the radio communication unit based on a state transition parameter for use in controlling a state transition with regard to the user equipment and the base station, the state transition parameter being calculated by the server device based on the packet statistics information and notified from the server device to the base station.

11. A server device comprising:
a network communication unit configured to communicate by radio with a base station communicable with a user equipment;
a packet statistics information receiver configured to receive packet statistics information calculated based on information relating to packets that each of plural applications executed by the user equipment transceives, with the packet statistics information being reported from the user equipment;
a state transition parameter calculator configured to calculate, based on the packet statistics information received by the packet statistics information receiver, a state transition parameter for use in controlling a state transition with regard to the user equipment and the base station; and
a state transition parameter notifier configured to notify the base station of the state transition parameter calculated by the state transition parameter calculator.

12. A communication control method for use in a radio communication system having a user equipment and a base station capable of radio-communicating with each other, the method comprising:
executing, at the user equipment, plural applications in parallel;
obtaining, at the user equipment, for each of the plural applications, information relating to packets that each of the plural applications transceives, to calculate packet statistics information based on the obtained information;
reporting, from the user equipment, the base station of the packet statistics information;
receiving, at the base station, the packet statistics information from the user equipment;
calculating, at the base station, based on the received packet statistics information, a state transition parameter for use in controlling a state transition with regard to the user equipment and the base station; and
controlling, at the base station, a state transition for the base station based on the calculated state transition parameter.

13. A communication control method for use in a radio communication system having a user equipment and a base station capable of radio-communicating with each other and a server device, the method comprising:
executing, at the user equipment, plural applications in parallel;
obtaining, at the user equipment, for each of the plural applications, information relating to packets that each of the plural applications transceives, to calculate packet statistics information based on the obtained information;
reporting, from the user equipment, the server device of the packet statistics information via the base station;
receiving, at the server device, the packet statistics information from the user equipment;
calculating, at the server device, based on the received packet statistics information, a state transition parameter for use in controlling a state transition with regard to the user equipment and the base station;
notifying, at the server device, the base station of the calculated state transition parameter;
transferring, at the base station, the packet statistics information received from the user equipment; and
controlling, at the base station, a state transition for the base station based on the state transition parameter notified from the server device.
